# EUROPEAN PATENT SPECIFICATION

(11) **EP 3 300 439 B1**
(45) Date of publication and mention of the grant of the patent: **07.04.2021**
(21) Application number: 15896800.8
(22) Date of filing: 30.06.2015
(51) Int. Cl.: H04L 5/00, H04W 72/00, H04B 7/06, H04L 27/00, H04B 17/30, H04W 72/04, H04W 72/08, H04W 24/10

(54) **DATA TRANSMISSION METHOD AND DEVICE**
DATENÜBERTRAGUNGSVERFAHREN UND -VORRICHTUNG
PROCÉDÉ ET DISPOSITIF DE TRANSMISSION DE DONNÉES

(43) Date of publication of application: 28.03.2018
(73) Proprietor: Huawei Technologies Co., Ltd., Longgang District Shenzhen, Guangdong 518129 (CN)
(72) Inventor: LIU, Jianqin, Shenzhen Guangdong 518129 (CN); QU, Bingyu, Shenzhen Guangdong 518129 (CN); ZHANG, Jian, Shenzhen Guangdong 518129 (CN)
(74) Representative: Gill Jennings & Every LLP
(86) International application number: PCT/CN2015/083013
(87) International publication number: WO 2017/000269

(56) References cited:
- EP-A1- 2 670 057
- WO-A1-2010/129597
- CN-A- 101 340 230
- CN-A- 101 340 714
- CN-A- 101 534 235
- CN-A- 103 634 068
- US-A1- 2004 028 011
- US-A1- 2005 117 557
- US-A1- 2005 272 432

## Description

### TECHNICAL FIELD

The present invention relates to the field of communications technologies, and in particular, to a data transmission method and apparatus.

### BACKGROUND

With development of intelligent terminals, the intelligent terminal can support increasingly more types of services such as a video service. Therefore, current spectrum resources cannot meet explosively growing capacity requirements of the intelligent terminal. A high frequency band with a larger available bandwidth gradually becomes a candidate frequency band of a next-generation communications system. For example, in a range of 3 GHz to 200 GHz, a potentially available bandwidth is about 250 GHz.

However, different from an operating frequency band of an existing communications system, at a same propagation distance, the high frequency band causes larger path losses. Especially, impact of factors such as the atmosphere and vegetation further increases radio propagation losses. Therefore, to compensate for a path loss caused by the high frequency band to ensure that two communications devices with a relatively long relative distance can still communicate, an optional manner is to provide a higher antenna gain for the high frequency band. In this way, an analog beam of the high frequency band is much narrower than that of a low frequency band. Each high-frequency analog narrow beam can cover only some users in a cell. Therefore, to ensure that each user in the cell can receive a signal of a common channel, all the users in the cell can be covered in a time division sending manner by using multiple analog beams. However, when movement of a user causes a change of a required analog beam, a connection has relatively poor continuity and stability.
Therefore, in the prior art, when the high frequency band is used for cellular communication, a relatively narrow high-frequency analog beam causes relatively poor data transmission reliability.

US 2015/272432A1 relates to an intra-cell common reuse for a wireledd communication system. US2004/028011A1 discloses a method and apparatus for operation in a multi-frequency band wideband system in the presence of an interference. EP2670057A1 relates to a channel status information feedback method and apparatus of a terminal in a multi-node system. US2005/11755 A1 discloses an UWB system where the base station divides the large high-frequency bandwidth in smaller subchannels and assigns them to the UEs for measurement purposes.

### SUMMARY

Embodiments of the present invention provide a data transmission method according to claims 1 and 3 and apparatus according to claims 6 and 8, to resolve a prior-art technical problem of poor data transmission reliability caused by a relatively narrow high-frequency analog beam when a high frequency band is used for cellular communication.

The invention is defined by the appended independent claims. Preferred embodiments and/or aspects are defined by the dependent claims.

One or more technical solutions provided in the embodiments of the present invention have at least the following technical effects or advantages:

In the embodiments of the present invention, an entire system bandwidth is divided into multiple transmission subbands that do not overlap each other. UE accesses at least two transmission subbands. When the UE and a network device transmit a signal, the signal can be simultaneously transmitted on the at least two transmission subbands. Therefore, according to the method in the embodiments of the present invention, UE connection reliability can be enhanced. When the method is applied to a high frequency band, a bandwidth of the entire high frequency band may be divided into multiple transmission subbands that do not overlap each other, and the UE simultaneously accesses at least two transmission subbands. That is, according to the method in the embodiments of the present invention, diversity transmission of multiple connections is used, so that when high frequency coverage is limited, the UE connection reliability and data transmission reliability are improved, and a probability of a connection failure caused by movement of a user and a channel change in high frequency is reduced. Further, practicability of applying the high frequency band to cellular communication is improved.

### BRIEF DESCRIPTION OF DRAWINGS

FIG. 1 is a flowchart of a data transmission method according to an embodiment of the present invention;
FIG. 2 is a flowchart of another data transmission method according to an embodiment of the present invention;
FIG. 3 is a flowchart of a downlink control information transmission method according to an embodiment of the present invention;
FIG. 4 is a function block diagram of a data transmission apparatus according to an embodiment of the present invention;
FIG. 5 is a function block diagram of another data transmission apparatus according to an embodiment of the present invention;
FIG. 6 is a function block diagram of a downlink control information transmission apparatus according to an embodiment of the present invention;
FIG. 7 is a structural block diagram of a network side device according to an embodiment of the present invention;
FIG. 8 is a structural block diagram of user equipment according to an embodiment of the present invention; and
FIG. 9 is a structural block diagram of another network side device according to an embodiment of the present invention.

### DESCRIPTION OF EMBODIMENTS

Embodiments of the present invention provide a data transmission method and apparatus, so as to resolve a prior-art technical problem that reliability is relatively poor because a beam is relatively narrow when a high frequency band is used for cellular communication.

To resolve the foregoing technical problem, a main idea of a technical solution in the embodiments of the present invention is as follows:

An entire system bandwidth is divided into multiple transmission subbands that do not overlap each other, and UE accesses at least two transmission subbands. That is, at least two connections between the UE and a network side device are kept, to improve data transmission reliability.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention, which is solely defined by the appended claims.

In addition, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

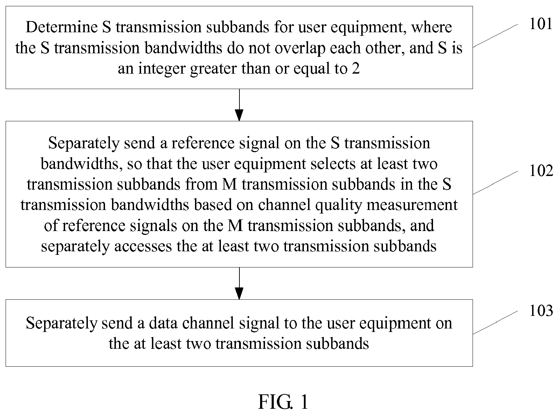

Referring to FIG. 1, FIG. 1 is a flowchart of a data transmission method according to an embodiment of the present invention. In this embodiment, the method shown in FIG. 1 is applied to a network side device. For example, the network side device is a base station. In this specification, the base station may be a device that is in an access network and that communicates with a wireless terminal over an air interface by using one or more sectors. The base station may be configured to mutually convert a received over-the-air frame and an Internet Protocol (IP) packet and serve as a router between the wireless terminal and a remaining portion of the access network. The remaining portion of the access network may include an IP network. The base station may further coordinate attribute management of the air interface. For example, the base station may be a base transceiver station (English: Base Transceiver Station, BTS for short) in Global system for mobile communications (English: Global System of Mobile communication, GSM for short) or Code Division Multiple Access (English: Code Division Multiple Access, CDMA for short), or may be a NodeB (English: NodeB, NB for short) in Wideband Code Division Multiple Access (English: Wideband Code Division Multiple Access, WCDMA for short), or may be an evolved NodeB (English: Evolutional Node B, eNB or eNodeB for short) in Long Term Evolution (English: Long Term Evolution, LTE for short), a relay node or an access point, a base station in a future 5G network, or the like. This is not limited in the present invention.

As shown in FIG. 1, the method includes the following steps:
Step 101: Determine S transmission subbands for user equipment, where the S transmission subbands do not overlap each other, and S is an integer greater than or equal to 2.
Step 102: Separately send a reference signal on the S transmission subbands, so that the user equipment selects at least two transmission subbands from M transmission subbands in the S transmission subbands based on channel quality measurement of reference signals on the M transmission subbands, and separately accesses the at least two transmission subbands, where M is an integer greater than or equal to 2 and less than or equal to S.
Step 103: Separately send a data channel signal to the user equipment on the at least two transmission subbands.

The user equipment in this specification may be a wireless terminal or may be a wired terminal. The wireless terminal may be a device that provides voice and/or other service data connectivity for a user, a handheld device with a wireless connection function, or another processing device connected to a wireless modem. The wireless terminal may communicate with one or more core networks by using a radio access network (English: Radio Access Network, RAN for short). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, the wireless terminal may be a device such as a personal communications service (English: Personal Communication Service, PCS for short) phone, a cordless telephone set, a Session Initiation Protocol (English: Session Initiation Protocol, SIP for short) phone, a wireless local loop (English: Wireless Local Loop, WLL for short) station, or a personal digital assistant (English: Personal Digital Assistant, PDA for short). The wireless terminal may also be referred to as a system, a subscriber unit (Subscriber Unit), a subscriber station (Subscriber Station), a mobile station (Mobile Station), a mobile station (Mobile), a remote station (Remote Station), a remote terminal (Remote Terminal), an access terminal (Access Terminal), a user terminal (User Terminal), a user agent (User Agent), or user equipment (User Device or User Equipment).

For ease of description, the user equipment in this specification is replaced with UE in the following.

Specifically, before step 101, as agreed or preset in a protocol, a system bandwidth has been divided into N transmission subbands, and the N transmission subbands do not overlap each other. N is an integer greater than or equal to S. Bandwidths of two transmission subbands may be the same or may be different. For example, assuming that the system bandwidth is 1 GHz, the system bandwidth may be divided into five transmission subbands of 200 MHz. Certainly, the entire bandwidth may be divided into three transmission subbands of 200 MHz, one transmission subband of 300 MHz, and one transmission subband of 100 MHz.

Correspondingly, the S transmission subbands in step 101 are all or some of the N transmission subbands. Therefore, the S transmission subbands do not overlap each other, and bandwidths of the S transmission subbands may be the same or may be different.

In actual application, a possible implementation of determining the S transmission subbands for the UE is: determining the S transmission subbands for the UE according to predefined information. Specifically, the predefined information is cell-specific information or user-specific information. The "cell-specific" means that related information of a transmission subband is cell-level information, for example, a bandwidth, a quantity, and a number of the transmission subband. That is, different UEs in a same cell obtain same related information of a transmission subband. The "user-specific" means that related information of a transmission subband is user-level information, for example, a bandwidth, a quantity, and a number of the transmission subband. That is, different UEs have independent related information of a transmission subband.

Certainly, in actual application, the S transmission subbands may be determined for the UE in another manner. This is not specifically limited in the present invention.

Optionally, after step 101, the method further includes: notifying or sending configuration information of the S transmission subbands to the UE. The configuration information of the S transmission subbands is cell-specific or user-specific. Specifically, a form in which information of the S transmission subbands is sent to the UE is shown in the following Table 1.

**Table 1**

| Cell-specific system bandwidth configuration | User-specific transmission subband configuration 0 | User-specific transmission subband configuration 1 | User-specific transmission subband configuration 2 | User-specific transmission subband configuration 3 | User-specific transmission subband configuration 4 | User-specific transmission subband configuration 5 |
|---|---|---|---|---|---|---|
| 0 | 2000 | 200 | 100 | 50 | 20 | 10 |
| 1 | 1800 | 180 | 90 | 45 | 20 | 10 |
| 2 | 1600 | 160 | 80 | 40 | 20 | 10 |
| 3 | 1400 | 140 | 70 | 35 | 20 | 10 |

In Table 1, there are six user-specific bandwidth configuration options of a transmission subband in each cell-specific system bandwidth configuration. A unit of values of bandwidth configurations of the system bandwidth or the transmission subbands in Table 1 is a resource block (English: Resource Block, RB for short). In this embodiment, it is assumed that a cell-specific system bandwidth configuration determined for UE 0 is 0, and therefore a user-specific bandwidth configuration that is of a transmission subband and that is corresponding to the cell-specific system bandwidth configuration may be one of 2000 RBs, 200 RBs, 100 RBs, 50 RBs, 20 RBs, or 10 RBs. A network device sends an index value of a cell-specific system bandwidth configuration and an index value of a corresponding user-specific transmission subband configuration to the user equipment. In the example above, when an index value of the user-specific transmission subband configuration of the UE 0 is 2, the network device needs to send only an index value 0 of the cell-specific system bandwidth configuration and the index value 2 of the user-specific transmission subband configuration to the UE 0. The sent index values may be in a (0, 2) manner or in another manner. This is not limited herein.

After the S transmission subbands are determined for the UE, step 102 is performed subsequently. That is, the reference signal is separately sent on the S transmission subbands, so that the UE selects the at least two transmission subbands from the M transmission subbands in the S transmission subbands based on the channel quality measurement of the reference signals on the M transmission subbands, and separately accesses the at least two transmission subbands.

Specifically, a reference signal may be an X-type reference signal (English: X-type Reference Signal, XRS for short). The XRS may be a cell-specific reference signal (English: cell-specific Reference Signal, CRS for short) or another user-specific reference signal in a current Long Term Evolution (English: Long Term Evolution, LTE for short) system. The user-specific reference signal is, for example, a channel state information-reference signal (English: Channel State Information-Reference Signal, CSI-RS for short) or a demodulation reference signal (English: DeModulation Reference Signal, DMRS for short).

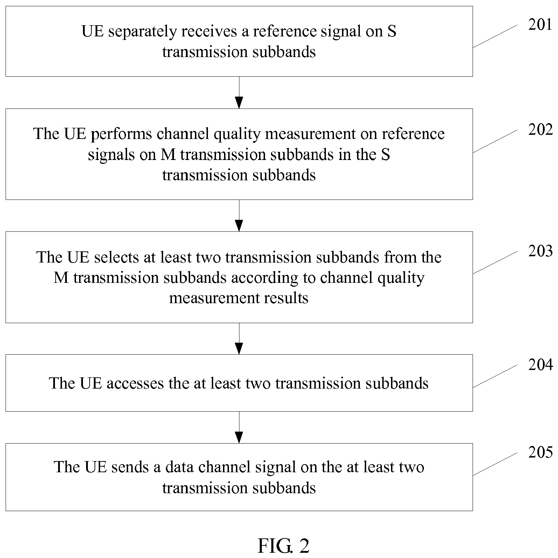

The following describes an implementation process of step 102 with reference to a data transmission method procedure on a UE side. Referring to FIG. 2, FIG. 2 is a flowchart of a data transmission method on the UE side according to an embodiment of the present invention.

As shown in FIG. 2, the method includes the following steps:
Step 201: UE separately receives a reference signal on the S transmission subbands.
Step 202: The UE performs channel quality measurement on reference signals on M transmission subbands in the S transmission subbands.
Step 203: The UE selects at least two transmission subbands from the M transmission subbands according to channel quality measurement results.
Step 204: The UE accesses the at least two transmission subbands.
Step 205: The UE sends a data channel signal on the at least two transmission subbands.

After the reference signal is sent in step 102, correspondingly, the UE performs step 201, that is, separately receives the reference signal on the S transmission subbands. It should be noted that one reference signal or one group of reference signals may be separately received on each transmission subband in the S transmission subband, and this depends on whether one reference signal or one group of reference signals are sent on each transmission subband in step 102. In short, the reference signal received in step 201 is corresponding to the reference signal sent in step 102.

Subsequently, the UE performs step 202, that is, performs the channel quality measurement on the reference signals on the M transmission subbands in the S transmission subbands. Specifically, the channel quality measurement may be radio resource management (English: Radio Resource Management, RRM for short) measurement, or may be channel quality indication (English: Channel Quality Indication, CQI for short) measurement. Certainly, in actual application, the channel quality measurement may be of another type. This is not specifically limited in the present invention.

After the channel quality measurement, step 203 is performed subsequently. That is, at least two transmission subbands are selected from the M transmission subbands according to the channel quality measurement results. In actual application, there are multiple implementations of selecting the at least two transmission subbands. For example, transmission subbands corresponding to reference signals whose channel quality measurement results rank top P may be selected, and P is a positive integer greater than or equal to 2 and less than or equal to M. Alternatively, a transmission subband corresponding to a reference signal whose channel quality measurement result is greater than a preset threshold may be selected.

It should be noted that the UE may measure reference signals on all of the S transmission subbands, and then select at least two transmission subbands according to measurement results. Alternatively, the UE may measure reference signals on some of the S transmission subbands, and then select at least two transmission subbands according to measurement results. For example, after measuring the reference signals on some of the S transmission subbands, the UE finds that a quantity of channel quality measurement results that reach the preset threshold reaches a quantity of transmission subbands that need to be accessed by the UE, and the UE may stop measurement of a reference signal on another transmission channel.

After selecting the at least two transmission subbands, the UE may further report, to a network side device, numbers of the at least two transmission subbands or numbers of reference signals transmitted on the at least two transmission subbands.

After the at least two transmission subbands are selected, step 204 is performed subsequently. That is, the at least two transmission subbands are accessed. An access process includes: for example, separately sending, by the UE, a preamble (Preamble) sequence on the at least two transmission subbands. The network side device sends a random access response (English: Random Access Response, RAR for short) on the at least two transmission subbands. The RAR may include information such as timing and uplink resource allocation. The network side device further resolves a conflict over multiple pieces of competitive access on each transmission subband.

It should be noted that the preamble sequence sent on the at least two transmission subbands may be a preamble sequence specific to each transmission subband. That is, there are specific preamble sequences and specific physical random access channel (English: Physical Random Access Channel, PRACH for short) configuration information on different transmission subbands. The PRACH configuration information includes time density, a frequency location, an available sequence, and the like of a random access channel (English: Random Access Channel, RACH for short).

After the UE accesses the at least two transmission subbands, at least two connections between the UE and a same network side device are simultaneously kept. The network side device may perform step 103, and the UE may perform step 205. Therefore, both sending a signal by the UE to the network side device and sending a signal by the network side device to the UE are performed by using the at least two transmission subbands. Therefore, signal transmission reliability can be improved.

Optionally, in step 103 and step 205, the data channel signals separately sent on the at least two transmission subbands are corresponding to a same hybrid automatic repeat request (English: Hybrid Automatic Repeat Request, HARQ for short) process and a same transmission mode. Specifically, a data channel signal may be repeatedly mapped to the at least two transmission subbands, and in this case, data channel signals on different transmission subbands in the at least two transmission subbands are the same. In this way, it may be ensured that when an exception occurs in a data channel signal on a transmission subband, transmission on another transmission subband can still be properly performed, thereby improving data transmission reliability.

Optionally, in step 103 and step 205, the data channel signals sent on the at least two transmission subbands are each corresponding to one HARQ process. In this case, data sent on the at least two transmission subbands may be the same or may be different. Specifically, the data channel signals may be jointly mapped to the at least two transmission subbands.

Optionally, on the UE side, the UE may determine the S transmission subbands according to predefined information; or receive configuration information of the S transmission subbands, and determine the S transmission subbands according to the configuration information. The content is the same as the content described on a network device side, and is not described herein again.

Optionally, after step 101, and before, in, or after step 102, the method further includes: separately sending, on the S transmission subbands, common channel signals or common reference signals such as a broadcast channel (English: Broadcast Channel, BCH for short) signal, a primary synchronization signal (English: Primary Synchronization Signal, PSS for short), a secondary synchronization signal (English: Secondary Synchronization Signal, SSS for short), and a control channel (English: Control Channel, CCH for short) signal. Correspondingly, the UE receives the common channel signals or the common reference signals on each transmission subband, and performs time and/or frequency synchronization of each transmission subband according to the common channel signals or the common reference signals. Further, the UE may perform cell identifier (ID) identification and cyclic prefix (English: Cyclic Prefix, CP for short) length detection. Specific manners of performing the time and/or frequency synchronization, the cell ID identification, and the CP length detection are content well known by a person skilled in the art, and are not described herein.

Optionally, when an orthogonal frequency division multiplexing (English: Orthogonal Frequency Division Multiplexing, OFDM for short)-based addressing manner is used, the BCH signal, the PSS signal, and the SSS signal may occupy middle six RBs on each transmission subband, so that system overheads can be reduced.

Optionally, after step 102, the method further includes: separately sending at least one of a reference signal, a synchronization signal, a BCH signal, or a CCH signal on the at least two transmission subbands.

Specifically, the reference signal is, for example, the reference signal described above. The synchronization signal includes, for example, a PSS and an SSS.

Optionally, the reference signals separately sent on the at least two transmission subbands have a same configuration. In this embodiment, that the reference signals have a same configuration may be represented as: at least one of configuration periods, frequency density, or port information of resources of the reference signals are the same. Therefore, the user equipment may perform unified scheduling and maintenance and updating of an HARQ process based on channel quality measurement on the at least two transmission subbands. In addition, when the reference signals on the at least two transmission subbands have a same configuration, a notification of the configuration information may be simplified.

Correspondingly, the UE may receive at least one of the reference signal, the synchronization signal, the BCH signal, or the CCH signal.

When receiving the reference signal sent in this embodiment, the UE may perform RRM measurement, CQI measurement, or another channel quality measurement again. The UE reports reference signal received power (English: Reference Signal Receiving Power, RSRP for short) of the reference signals corresponding to the at least two transmission subbands. Each cell in a network is corresponding to one channel quality measurement result of the at least two transmission subbands. Optionally, the channel quality measurement result may be an average value or a maximum value of channel quality measurement results of the at least two transmission subbands. The network side device may select, based on a channel quality measurement result such as an RSRP value of each cell, an optimal target cell for the UE, and perform a subsequent hard handover between cells. However, in each cell, the UE performs a soft handover (an original connection and a new connection are simultaneously kept during a handover) between multiple transmission subbands.

A measurement and handover event between transmission subbands in each cell may be defined as: when an RSRP value of a reference signal is greater than or equal to a first threshold value, a transmission subband corresponding to the reference signal is accessed, and when an RSRP value of a reference signal is less than or equal to a second threshold value, a transmission subband corresponding to the reference signal is disconnected. Optionally, a specific handover method includes: when the user equipment is handed over from a transmission subband 1 to a transmission subband 2, the user equipment simultaneously keeps connections on two transmission subbands until the user equipment is completely handed over to the transmission subband 2.

After step 102, the method further includes: determining a transmission subband in the at least two transmission subbands as a common transmission subband; simultaneously sending at least one set of signals on the common transmission subband. Each set of signals includes at least one signal of a reference signal, a synchronization signal, a BCH signal, a system information block (English: System Information Block, SIB for short), or a CCH signal including a common search space (CSS) signal of a CCH.

Specifically, the reference signal may be the same as the reference signal described above. The synchronization signal may include a PSS and an SSS.

Specifically, the simultaneously sending at least one set of signals on the common transmission subband may be specifically simultaneously sending the at least one set of reference signals by using at least one different analog beam, that is, in a space division sending manner. Each set of reference signals in the at least one set of reference signals is corresponding to one analog beam. Therefore, multiple sets of reference signals may be simultaneously transmitted on a same time-frequency resource. Compared with a solution of separately transmitting the at least one set of reference signals on multiple transmission subbands, resource overheads of the reference signals may be reduced.

Optionally, the common transmission subband may be designated as a primary transmission subband of all UEs. Certainly, the common transmission subband may be used as a secondary transmission subband of UE. Alternatively, the common transmission subband may be used when all the UEs need to be synchronized or periodically read system information.

Optionally, a CRS may be transmitted only on the common transmission subband, or may be sent on each transmission subband so that the UE performs fine synchronization.

Optionally, for the BCH signal, at least one of system key information such as a downlink system bandwidth, a number of a transmission subband, a bandwidth of a transmission subband, a physical HARQ indicator channel (English: Physical Hybrid ARQ Indicator Channel, PHICH for short) resource, or a system frame number (English: System Frame Number, SFN for short) is sent on each transmission subband. However, system information with relatively large overheads, for example, the SIB such as an SIB 1 to an SIB 13, is sent on the common subbandwidth. Specifically, the SIB may be transmitted on middle six physical resource blocks (PRB) on the common transmission subband, so that overheads of system design can be reduced.

Specifically, the CSS signal of a CCH is specifically, for example, a CSS signal of a physical downlink control channel (English: Physical Downlink Control Channel, PDCCH for short).

Optionally, the method further includes: sending instruction information on the common transmission subband. The instruction information is used to instruct to use at least one other transmission subband in the S transmission subbands as an additional transmission subband that is used to transmit the CSS signal. Correspondingly, the UE receives the instruction information. Usually, when a large quantity of UEs need to access the common transmission subband temporarily, an additional transmission subband may be added to transmit the CSS signal, so that a large quantity of accessed UEs receive the RAR.

Optionally, in actual application, each of the at least two transmission subbands is associated with one piece of precoding. The precoding associated with each transmission subband is precoding in a first precoding group at a first moment. The precoding associated with each transmission subband is precoding in a second precoding group at a second moment. Precoding in the first precoding group is not identical to precoding in the second precoding group. Specifically, although each transmission subband is associated with one piece of precoding, as time changes, the precoding associated with each transmission subband may change. That is, at a same moment, each transmission subband is associated with only one piece of precoding.

Specifically, each precoding group may include only one piece of precoding. In this case, at a same moment, all transmission subbands are associated with same precoding. Because all the transmission subbands are associated with same precoding, to implement wide coverage of all users in a cell, signals may be sent on each transmission subband in a time division manner, and each transmission subband is associated with different precoding at different sending moments. For example, each transmission subband is associated with precoding 1 at a moment 1, and each transmission subband is associated with precoding 2 and precoding 3 respectively at a following moment 2 and a following moment 3. Because the UE may keep connections on at least two transmission subbands at each moment, signal transmission reliability can also be improved.

Specifically, usually, when each cell supports a relatively large quantity of pieces of precoding, each precoding group may include at least two pieces of precoding. Then time division sending is performed per precoding group. Specifically, for example, each transmission subband is associated with one piece of precoding in a precoding group 1 at the moment 1, and each transmission subband is associated with one piece of precoding in a precoding group 2 at the later moment 2, and so on. Precoding in the first precoding group may overlap precoding in the second precoding group. That is, the first precoding group and the second precoding group may have a same precoding subset. Likewise, the UE may keep connections on at least two transmission subbands at each moment, and therefore signal transmission reliability can also be improved.

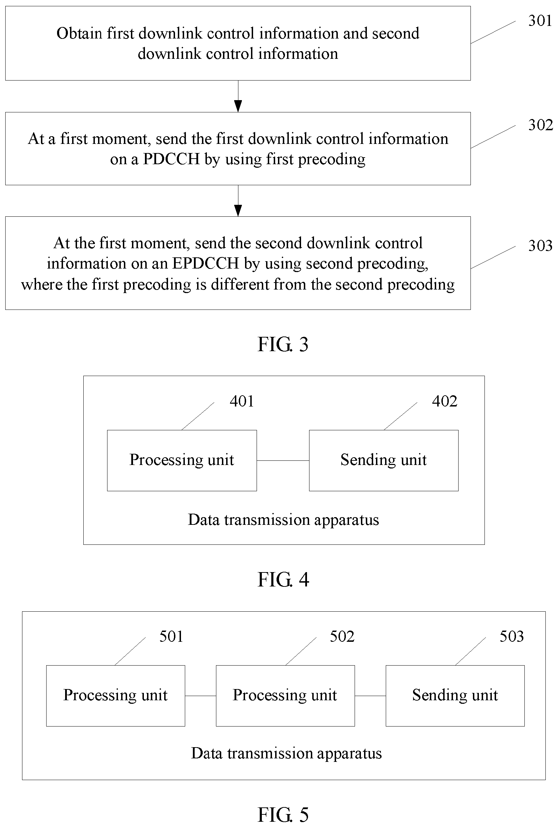

Based on a same invention concept, to enhance transmission reliability of a common channel such as a control channel, a channel diversity method may be used. Specifically, referring to FIG. 3, FIG. 3 is a flowchart of a downlink control information transmission method according to an embodiment of the present invention. The method includes the following steps:
Step 301: Obtain first downlink control information and second downlink control information.
Step 302: At a first moment, send downlink control information on a PDCCH by using first precoding.
Step 303: At the first moment, send the downlink control information on an enhanced physical downlink control channel (English: Enhanced Physical Downlink Control Channel, EPDCCH for short) by using second precoding.

Optionally, the first precoding is corresponding to a first analog beam, and the second precoding is corresponding to a second analog beam. Alternatively, the first precoding is a first analog beam, and the second precoding is a second analog beam. The first precoding is different from the second precoding, or the first analog beam is different from the second analog beam. The first downlink control information sent on the PDCCH and the second downlink control information sent on the EPDCCH may be the same or different. When the two pieces of control information are the same, according to the method in this embodiment, control information with same content is simultaneously transmitted on two control channels, to improve reliability of control information.

Optionally, a network side device such as a base station may trigger, by using higher layer signaling, implementation of the method shown in FIG. 3.

Optionally, a network side device such as a base station may indicate, on a PCFICH, whether diversity transmission of two control channels is supported currently.

Based on a same invention concept, an embodiment of the present invention further provides a data transmission apparatus to implement the method shown in FIG. 1. As shown in FIG. 4, the data transmission apparatus includes: a processing unit 401, configured to determine S transmission subbands for user equipment UE, where the S transmission subbands do not overlap each other, and S is an integer greater than or equal to 2; and a sending unit 402, configured to: separately send a reference signal on the S transmission subbands, so that the UE selects at least two transmission subbands from M transmission subbands in the S transmission subbands based on channel quality measurement of reference signals on the M transmission subbands, and separately accesses the at least two transmission subbands, where M is an integer greater than or equal to 2 and less than or equal to S; and separately send a data channel signal to the UE on the at least two transmission subbands.

Optionally, the processing unit 401 is configured to determine the S transmission subbands for the UE according to predefined information, where the predefined information is cell-specific or user-specific.

Optionally, data channel signals separately sent by the sending unit 402 on the at least two transmission subbands are corresponding to a same hybrid automatic repeat request HARQ process and a same transmission mode.

Optionally, the sending unit 402 is further configured to separately send at least one of a reference signal, a synchronization signal, a broadcast channel BCH signal, or a control channel signal on the at least two transmission subbands after separately sending the reference signal on the S transmission subbands.

Optionally, reference signals separately sent by the sending unit 402 on the at least two transmission subbands have a same configuration.

Optionally, the processing unit 401 is further configured to determine a transmission subband in the at least two transmission subbands as a common transmission subband after the sending unit 402 separately sends the reference signal on the S transmission subbands; and
the sending unit 402 is further configured to simultaneously send at least one set of signals on the common transmission subband by using at least one different analog beam, where each set of signals includes at least one signal of a reference signal, a synchronization signal, a system information block SIB, and a common search space CSS signal of a control channel.

Optionally, the sending unit 402 is further configured to send instruction information on the common transmission subband, where the instruction information is used to instruct to use at least one other transmission subband in the S transmission subbands as an additional transmission subband that is used to transmit the CSS signal.

Optionally, each of the at least two transmission subbands is associated with one piece of precoding, the precoding associated with each transmission subband is precoding in a first precoding group at a first moment, the precoding associated with each transmission subband is precoding in a second precoding group at a second moment, and precoding in the first precoding group is not identical to precoding in the second precoding group.

Optionally, the method unit is further configured to: after the processing unit 401 determines the S transmission subbands for the user equipment UE, send configuration information of the S transmission subbands to the UE, so that the UE determines the S transmission subbands according to the configuration information, where the configuration information is cell-specific or user-specific.

Various variations and specific instances in the data transmission method in the foregoing embodiment shown in FIG. 1 are also applicable to the data transmission apparatus in this embodiment. With the foregoing detailed descriptions of the data transmission method, a person skilled in the art can clearly understand an implementation of the data transmission apparatus in this embodiment. Therefore, for conciseness of the specification, details are not described herein again.

Based on a same invention concept, an embodiment of the present invention further provides a data transmission apparatus to implement the method shown in FIG. 2. As shown in FIG. 5, the data transmission apparatus includes: a receiving unit 501, configured to separately receive a reference signal on S transmission subbands, where the S transmission subbands do not overlap each other, and S is an integer greater than or equal to 2; a processing unit 502, configured to: perform channel quality measurement on reference signals on M transmission subbands in the S transmission subbands; select at least two transmission subbands from the M transmission subbands according to channel quality measurement results; and control user equipment UE to access the at least two transmission subbands; and a sending unit 503, configured to send a data channel signal on the at least two transmission subbands.

Optionally, the processing unit 502 is further configured to determine the S transmission subbands according to predefined information, where the predefined information is cell-specific or user-specific; or
the receiving unit 501 is further configured to receive configuration information of the S transmission subbands, and the processing unit 502 is further configured to determine the S transmission subbands based on the configuration information, where the configuration information is cell-specific or user-specific.

Optionally, data channel signals sent by the sending unit 503 on the at least two transmission subbands are corresponding to a same hybrid automatic repeat request HARQ process and a same transmission mode.

Optionally, the receiving unit 501 is further configured to separately receive at least one of a reference signal, a synchronization signal, a broadcast channel BCH signal, or a control channel signal on the at least two transmission subbands after the processing unit 502 controls the UE to access the at least two transmission subbands.

Optionally, reference signals separately received by the receiving unit 501 on the at least two transmission subbands have a same configuration.

Optionally, the receiving unit 501 is further configured to: after the processing unit 502 controls the UE to access the at least two transmission subbands, simultaneously receive, on a common transmission subband, at least one set of signals sent by using at least one different analog beam, where each set of signals includes at least one signal of a reference signal, a synchronization signal, a system information block SIB, and a common search space CSS signal of a control channel, and the common transmission subband is one of the at least two transmission subbands.

Optionally, the receiving unit 501 is further configured to receive instruction information on the common transmission subband, where the instruction information is used to instruct to use at least one other transmission subband in the S transmission subbands as an additional transmission subband that is used to transmit the CSS signal.

Optionally, each of the at least two transmission subbands is associated with one piece of precoding, the precoding associated with each transmission subband is precoding in a first precoding group at a first moment, the precoding associated with each transmission subband is precoding in a second precoding group at a second moment, and precoding in the first precoding group is not identical to precoding in the second precoding group.

Various variations and specific instances in the data transmission method in the foregoing embodiment shown in FIG. 2 are also applicable to the data transmission apparatus in this embodiment. With the foregoing detailed descriptions of the data transmission method, a person skilled in the art can clearly understand an implementation of the data transmission apparatus in this embodiment. Therefore, for conciseness of the specification, details are not described herein again.

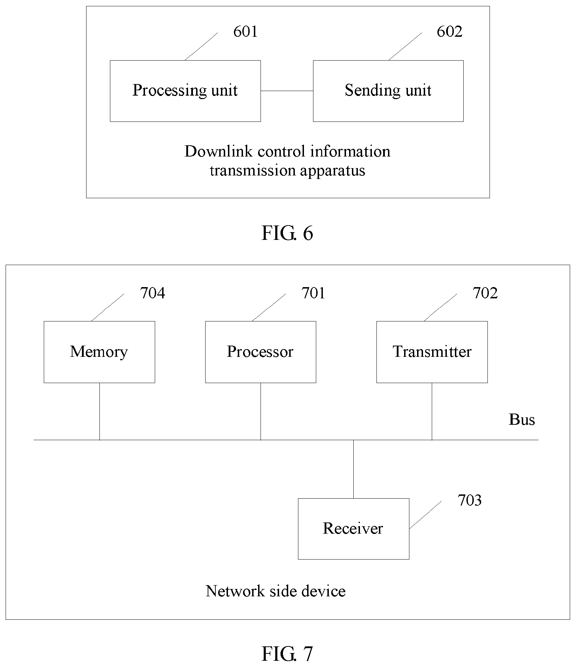

Based on a same invention concept, an embodiment of the present invention further provides a downlink control information transmission apparatus to implement the method shown in FIG. 3. As shown in FIG. 6, the downlink control information transmission apparatus includes: a processing unit 601, configured to obtain first downlink control information and second downlink control information; and a sending unit 602, configured to: at a first moment, send the first downlink control information on a physical downlink control channel PDCCH by using first precoding; and at the first moment, send the second downlink control information on an enhanced physical downlink control channel EPDCCH by using second precoding, where the first precoding is different from the second precoding.

Various variations and specific instances in the downlink control information transmission method in the foregoing embodiment shown in FIG. 3 are also applicable to the data transmission apparatus in this embodiment. With the foregoing detailed descriptions of the downlink control information transmission method, a person skilled in the art can clearly understand an implementation of the data transmission apparatus in this embodiment. Therefore, for conciseness of the specification, details are not described herein again.

Based on a same invention concept, an embodiment of the present invention further provides a network side device to implement the method shown in FIG. 1. As shown in FIG. 7, the network side device includes a processor 701, a transmitter 702, a receiver 703, and a memory 704. The processor 701 may be specifically a central processing unit or an application-specific integrated circuit (English: Application Specific Integrated Circuit, ASIC for short), or may be one or more integrated circuits used to control program execution, or may be a hardware circuit developed by using a field programmable gate array (English: Field Programmable Gate Array, FPGA for short). There may be one or more memories 704. The memory 704 may include a read-only memory (English: Read Only Memory, ROM for short), a random access memory (English: Random Access Memory, RAM for short), and a magnetic disk storage. These memories, the receiver 703, and the transmitter 702 are connected to the processing circuit 701 by using a bus. The receiver 703 and the transmitter 702 are configured to communicate with an external device by using a network, and specifically, may communicate with the external device by using a network such as the Ethernet, a radio access network, or a wireless local area network. The receiver 703 and the transmitter 702 may be two physically independent elements, or may be a physically same element.

Specifically, the processor 701 is configured to determine S transmission subbands for user equipment UE, where the S transmission subbands do not overlap each other, and S is an integer greater than or equal to 2. The transmitter 702 is configured to: separately send a reference signal on the S transmission subbands, so that the UE selects at least two transmission subbands from M transmission subbands in the S transmission subbands based on channel quality measurement of reference signals on the M transmission subbands, and separately accesses the at least two transmission subbands, where M is an integer greater than or equal to 2 and less than or equal to S; and separately send a data channel signal to the UE on the at least two transmission subbands.

Optionally, the processor 701 is configured to determine the S transmission subbands for the UE according to predefined information, where the predefined information is cell-specific or user-specific.

Optionally, data channel signals separately sent by the transmitter 702 on the at least two transmission subbands are corresponding to a same hybrid automatic repeat request HARQ process and a same transmission mode.

Optionally, the transmitter 702 is further configured to separately send at least one of a reference signal, a synchronization signal, a broadcast channel BCH signal, or a control channel signal on the at least two transmission subbands after separately sending the reference signal on the S transmission subbands.

Optionally, reference signals separately sent by the transmitter 702 on the at least two transmission subbands have a same configuration.

Optionally, the processor 701 is further configured to determine a transmission subband in the at least two transmission subbands as a common transmission subband after the transmitter 702 separately sends the reference signal on the S transmission subbands; and
the transmitter 702 is further configured to simultaneously send at least one set of signals on the common transmission subband by using at least one different analog beam, where each set of signals includes at least one signal of a reference signal, a synchronization signal, a system information block SIB, and a common search space CSS signal of a control channel.

Optionally, the transmitter 702 is further configured to send instruction information on the common transmission subband, where the instruction information is used to instruct to use at least one other transmission subband in the S transmission subbands as an additional transmission subband that is used to transmit the CSS signal.

Optionally, each of the at least two transmission subbands is associated with one piece of precoding, the precoding associated with each transmission subband is precoding in a first precoding group at a first moment, the precoding associated with each transmission subband is precoding in a second precoding group at a second moment, and precoding in the first precoding group is not identical to precoding in the second precoding group.

Optionally, the transmitter 702 is further configured to: after the processor 701 determines the S transmission subbands for the user equipment UE, send configuration information of the S transmission subbands to the UE, so that the UE determines the S transmission subbands according to the configuration information, where the configuration information is cell-specific or user-specific.

Various variations and specific instances in the data transmission method in the foregoing embodiment shown in FIG. 1 are also applicable to the network side device in this embodiment. With the foregoing detailed descriptions of the data transmission method, a person skilled in the art can clearly understand an implementation of the network side device in this embodiment. Therefore, for conciseness of the specification, details are not described herein again.

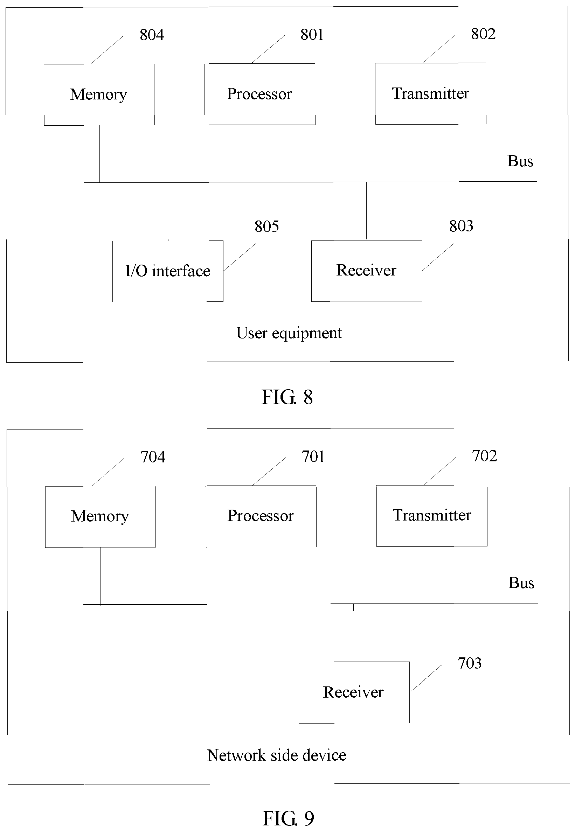

Based on a same invention concept, an embodiment of the present invention further provides user equipment to implement the method shown in FIG. 2. As shown in FIG. 8, the user equipment includes a processor 801, a transmitter 802, a receiver 803, a memory 804, and an I/O interface 805. The processor 801 may be specifically a central processing unit or an application-specific integrated circuit (English: Application Specific Integrated Circuit, ASIC for short), or may be one or more integrated circuits used to control program execution, or may be a hardware circuit developed by using a field programmable gate array (English: Field Programmable Gate Array, FPGA for short). There may be one or more memories 804. The memory 804 may include a read-only memory (English: Read Only Memory, ROM for short), a random access memory (English: Random Access Memory, RAM for short), and a magnetic disk storage. These memories, the receiver 803, and the transmitter 802 are connected to the processing circuit 801 by using a bus. The receiver 803 and the transmitter 802 are configured to communicate with an external device by using a network, and specifically, may communicate with the external device by using a network such as the Ethernet, a radio access network, or a wireless local area network. The receiver 803 and the transmitter 802 may be two physically independent elements, or may be a physically same element. The I/O interface 805 may be connected to a peripheral such as a mouse or a keyboard.

Specifically, the receiver 803 is configured to separately receive a reference signal on S transmission subbands, where the S transmission subbands do not overlap each other, and S is an integer greater than or equal to 2. The processor 801 is configured to: perform channel quality measurement on reference signals on M transmission subbands in the S transmission subbands; select at least two transmission subbands from the M transmission subbands according to channel quality measurement results; and control the user equipment to access the at least two transmission subbands. The transmitter 802 is configured to send a data channel signal on the at least two transmission subbands.

Optionally, the processor 801 is further configured to determine the S transmission subbands according to predefined information, where the predefined information is cell-specific or user-specific; or
the receiver 803 is further configured to receive configuration information of the S transmission subbands, and the processor 801 is further configured to determine the S transmission subbands based on the configuration information, where the configuration information is cell-specific or user-specific.

Optionally, data channel signals sent by the transmitter 802 on the at least two transmission subbands are corresponding to a same hybrid automatic repeat request HARQ process and a same transmission mode.

Optionally, the receiver 803 is further configured to separately receive at least one of a reference signal, a synchronization signal, a broadcast channel BCH signal, or a control channel signal on the at least two transmission subbands after the user equipment accesses the at least two transmission subbands.

Optionally, reference signals separately received by the receiver 803 on the at least two transmission subbands have a same configuration.

Optionally, the receiver 803 is further configured to: after the user equipment accesses the at least two transmission subbands, simultaneously receive, on a common transmission subband, at least one set of signals sent by using at least one different analog beam, where each set of signals includes at least one signal of a reference signal, a synchronization signal, a system information block SIB, and a common search space CSS signal of a control channel, and the common transmission subband is one of the at least two transmission subbands.

Optionally, the receiver 803 is further configured to receive instruction information on the common transmission subband, where the instruction information is used to instruct to use at least one other transmission subband in the S transmission subbands as an additional transmission subband that is used to transmit the CSS signal.

Optionally, each of the at least two transmission subbands is associated with one piece of precoding, the precoding associated with each transmission subband is precoding in a first precoding group at a first moment, the precoding associated with each transmission subband is precoding in a second precoding group at a second moment, and precoding in the first precoding group is not identical to precoding in the second precoding group.

Various variations and specific instances in the data transmission method in the foregoing embodiment shown in FIG. 2 are also applicable to the user equipment in this embodiment. With the foregoing detailed descriptions of the data transmission method, a person skilled in the art can clearly understand an implementation of the user equipment in this embodiment. Therefore, for conciseness of the specification, details are not described herein again.

Based on a same invention concept, an embodiment of the present invention further provides a network side device to implement the method shown in FIG. 2. As shown in FIG. 9, the network side device includes a processor 901, a transmitter 902, a receiver 903, and a memory 904. The processor 901 may be specifically a central processing unit or an application-specific integrated circuit (English: Application Specific Integrated Circuit, ASIC for short), or may be one or more integrated circuits used to control program execution, or may be a hardware circuit developed by using a field programmable gate array (English: Field Programmable Gate Array, FPGA for short). There may be one or more memories 904. The memory 904 may include a read-only memory (English: Read Only Memory, ROM for short), a random access memory (English: Random Access Memory, RAM for short), and a magnetic disk storage. These memories, the receiver 903, and the transmitter 902 are connected to the processing circuit 901 by using a bus. The receiver 903 and the transmitter 902 are configured to communicate with an external device by using a network, and specifically, may communicate with the external device by using a network such as the Ethernet, a radio access network, or a wireless local area network. The receiver 903 and the transmitter 902 may be two physically independent elements, or may be a physically same element.

Specifically, the processor 901 is configured to obtain first downlink control information and second downlink control information. The transmitter 902 is configured to: at a first moment, send the first downlink control information on a physical downlink control channel PDCCH by using first precoding; and at the first moment, send the second downlink control information on an enhanced physical downlink control channel EPDCCH by using second precoding, where the first precoding is different from the second precoding.

Various variations and specific instances in the downlink control information transmission method in the foregoing embodiment shown in FIG. 3 are also applicable to the network side device in this embodiment. With the foregoing detailed descriptions of the downlink control information transmission method, a person skilled in the art can clearly understand an implementation of the network side device in this embodiment. Therefore, for conciseness of the specification, details are not described herein again.

The one or more technical solutions provided in the embodiments of this application have at least the following technical effects or advantages:

In the embodiments of the present invention, an entire system bandwidth is divided into multiple transmission subbands that do not overlap each other. UE accesses at least two transmission subbands. When the UE and a network device transmit a signal, the signal can be simultaneously transmitted on the at least two transmission subbands. Therefore, according to the method in the embodiments of the present invention, UE connection reliability and data transmission reliability can be enhanced. When the method is applied to a high frequency band that requires relatively high data transmission reliability, a bandwidth of the entire high frequency band may be divided into multiple low-frequency transmission subbands that do not overlap each other, and the UE simultaneously accesses at least two transmission subbands. That is, according to the method in the embodiments of the present invention, diversity transmission of multiple connections is kept on the at least two transmission subbands, so that when high frequency coverage is limited, the UE connection reliability and the data transmission reliability can be improved, and a probability of a connection failure caused by movement of a user and a channel change in high frequency is reduced. Further, practicability of applying the high frequency band to cellular communication is improved.

## Claims

1. A data transmission method by a network side device, comprising:
the network side device uses multiple narrow high-frequency analog beams;
determining (101), S transmission subbands for a user equipment, UE, wherein the S transmission subbands do not overlap each other, and S is an integer greater than or equal to 2;
separately sending (102), a set of reference signals on the S transmission subbands, so that the UE selects at least two transmission subbands from M transmission subbands in the S transmission subbands based on channel quality measurements on the M transmission subbands, and separately accesses the at least two transmission subbands, wherein M is an integer greater than or equal to 2 and less than or equal to S; and
receiving a report on the at least two selected subbands from the UE; and
separately sending (103) a data channel signal to the UE on the at least two transmission subbands; and
wherein after the separately sending a set of reference signals on the S transmission subbands, the method further comprises:
simultaneously sending at least one set of signals, comprising at least one signal of: the set of reference signals , a synchronization signal, a broadcast channel, BCH signal, or a control channel signal on a common transmission subband, and the common transmission subband is one of the at least two transmission subbands;
wherein the simultaneously sending the at least one set of signals uses at least one different analog beam of the multiple analogue beams.

2. The method according to claim 1, wherein after the determining S transmission subbands for user equipment UE, the method further comprises:
sending configuration information of the S transmission subbands to the UE, so that the UE determines the S transmission subbands according to the configuration information, wherein the configuration information is cell-specific or user-specific.

3. A data transmission method by a user equipment, comprising:
the user equipment uses multiple narrow high-frequency analog beams;
separately receiving (201), by the user equipment, UE, a set of reference signals on S transmission subbands, wherein the S transmission subbands do not overlap each other, and S is an integer greater than or equal to 2;
performing (202), by the UE, channel quality measurements on M transmission subbands in the S transmission subbands, wherein M is an integer greater than or equal to 2 and less than or equal to S;
selecting (203), by the UE, at least two transmission subbands from the M transmission subbands according to channel quality measurement results, and reporting the at least two selected subbands to a network side device;
accessing (204), by the UE, the at least two transmission subbands; and sending (205), by the UE, a data channel signal on the at least two transmission subbands; and
wherein after the accessing, by the UE, the at least two transmission subbands, the method further comprises:
simultaneously receiving, by the UE, at least one set of signals, comprising at least one signal of: the set of reference signals, a synchronization signal, a broadcast channel, BCH signal, or a control channel signal on a common transmission subband, and the common transmission subband is one of the at least two transmission subbands;
wherein the simultaneously receiving the at least one set of signals uses at least one different analog beam of the multiple analogue beams..

4. The method according to claim 3, wherein before the separately receiving, by user equipment UE, a set of reference signals on S transmission subbands, the method further comprises:
determining the S transmission subbands according to predefined information, wherein the predefined information is cell-specific or user-specific; or
receiving configuration information of the S transmission subbands, and determining the S transmission subbands based on the configuration information, wherein the configuration information is cell-specific or user-specific.

5. The method according to claim 4, wherein after the accessing, by the UE, the at least two transmission subbands, the method further comprises:
receiving, by the UE, instruction information on the common transmission subband, wherein the instruction information is used to instruct to use at least one other transmission subband in the S transmission subbands as an additional transmission subband that is used to transmit a common search space, CSS, signal.

6. A data transmission apparatus, for a network side device, comprising:
the data transmission apparatus uses multiple narrow high-frequency analog beams;
a processing unit (401), configured to determine S transmission subbands for a user equipment UE, wherein the S transmission subbands do not overlap each other, and S is an integer greater than or equal to 2; and
a sending unit (402), configured to: separately send a set of reference signals on the S transmission subbands, so that the UE selects at least two transmission subbands from M transmission subbands in the S transmission subbands based on channel quality measurements on the M transmission subbands, and separately accesses the at least two transmission subbands, wherein M is an integer greater than or equal to 2 and less than or equal to S; and
a receiving unit, configured to: receive a report on the at least two selected subbands from the UE; and
wherein the sending unit is further configured to simultaneously send at least one set of signals, comprising at least one signal of: the set of reference signals, a synchronization signal, a broadcast channel, BCH signal, or a control channel signal on a common transmission subband, and the common transmission subband is one of the at least two transmission subbands after separately sending the set of reference signals on the S transmission subbands; and
the sending unit is further configured to separately send a data channel signal to the UE on the at least two transmission subbands;
wherein the sending unit is specifically configured to simultaneously send the at least one set of signals using at least one different analog beam of the multiple analogue beams.

7. The apparatus according to claim 6, wherein the method unit is further configured to: after the processing unit determines the S transmission subbands for the user equipment UE, send configuration information of the S transmission subbands to the UE, so that the UE determines the S transmission subbands according to the configuration information, wherein the configuration information is cell-specific or user-specific.

8. A data transmission apparatus, for a user equipment, comprising:
the data transmission apparatus uses multiple narrow high-frequency analog beams;
a receiving unit (501), configured to separately receive a set of reference signals on S transmission subbands, wherein the S transmission subbands do not overlap each other, and S is an integer greater than or equal to 2;
a processing unit (502), configured to: perform channel quality measurements on M transmission subbands in the S transmission subbands; select at least two transmission subbands from the M transmission subbands according to channel quality measurement results; and control user equipment UE to access the at least two transmission subbands wherein M is an integer greater than or equal to 2 and less than or equal to S,; and
a sending unit (503), configured to report the at least two selected subbands to the network side device; and
wherein the receiving unit is further configured to simultaneously receive at least one set of signals, comprising at least one signal of: the set of reference signals, a synchronization signal, broadcast channel BCH signals, or a control channel signal on a common transmission subband, and the common transmission subband is one of the at least two transmission subbands after the processing unit controls the UE to access the at least two transmission subbands; and
the sending unit, is further configured to send a data channel signal on the at least two transmission subbands;
wherein that the receiving unit is specifically configured to receive the at least one set of signals using at least one different analog beam of the multiple analogue beams.

9. The apparatus according to claim 8, wherein the processing unit is further configured to determine the S transmission subbands according to predefined information, wherein the predefined information is cell-specific or user-specific; or
the receiving unit is further configured to receive configuration information of the S transmission subbands, and the processing unit is further configured to determine the S transmission subbands based on the configuration information, wherein the configuration information is cell-specific or user-specific.

## Patentansprüche

1. Datenübertragungsverfahren durch eine netzwerkseitige Vorrichtung, umfassend:
die netzwerkseitige Vorrichtung verwendet mehrere schmale analoge Hochfrequenzstrahlen;
Bestimmen (101) von S Übertragungssubbändern für ein Benutzergerät, UE, wobei die S Übertragungssubbänder einander nicht überlappen und S eine ganze Zahl größer oder gleich 2 ist;
getrenntes Senden (102) eines Satzes von Referenzsignalen auf den S Übertragungssubbändern, so dass das UE mindestens zwei Übertragungssubbänder aus M Übertragungssubbändern in den S Übertragungssubbändern basierend auf Kanalqualitätsmessungen auf den M Übertragungssubbändern auswählt und getrennt auf die mindestens zwei Übertragungssubbänder zugreift, wobei M eine ganze Zahl größer oder gleich 2 und kleiner oder gleich S ist; und
Empfangen eines Berichts über die mindestens zwei ausgewählten Subbänder von dem UE; und
getrenntes Senden (103) eines Datenkanalsignals an das UE auf den mindestens zwei Übertragungssubbändern; und
wobei nach dem getrennten Senden eines Satzes von Referenzsignalen auf den S Übertragungssubbändern das Verfahren ferner umfasst:
gleichzeitiges Senden mindestens eines Satzes von Signalen, der mindestens ein Signal aus den Folgenden umfasst: dem Satz von Referenzsignalen, einem Synchronisationssignal, einem Signal eines Übertragungskanals, BCH, oder einem Steuerkanalsignal auf einem gemeinsamen Übertragungssubband, und das gemeinsame Übertragungssubband eines der mindestens zwei Übertragungssubbänder ist;
wobei das gleichzeitige Senden des mindestens einen Satzes von Signalen mindestens einen unterschiedlichen analogen Strahl der mehreren analogen Strahlen verwendet.

2. Verfahren nach Anspruch 1, wobei nach dem Bestimmen von S Übertragungssubbändern für Benutzergeräte UE das Verfahren ferner umfasst:
Senden von Konfigurationsinformationen der S Übertragungssubbänder an das UE, so dass das UE die S Übertragungssubbänder gemäß den Konfigurationsinformationen bestimmt, wobei die Konfigurationsinformationen zellenspezifisch oder benutzerspezifisch sind.

3. Datenübertragungsverfahren durch ein Benutzergerät, umfassend:
das Benutzergerät verwendet mehrere schmale analoge Hochfrequenzstrahlen;
getrenntes Empfangen (201) eines Satzes von Referenzsignalen auf S Übertragungssubbändern durch das Benutzergerät, UE, wobei die S Übertragungssubbänder einander nicht überlappen und S eine ganze Zahl größer oder gleich 2 ist;
Durchführen (202) von Kanalqualitätsmessungen an M Übertragungssubbändern in den S Übertragungssubbändern durch das UE, wobei M eine ganze Zahl größer oder gleich 2 und kleiner oder gleich S ist;
Auswählen (203) von mindestens zwei Übertragungssubbändern aus den M Übertragungssubbändern gemäß Kanalqualitätsmessergebnissen durch das UE und Berichten der mindestens zwei ausgewählten Subbänder an eine netzwerkseitige Vorrichtung;
Zugreifen (204) auf die mindestens zwei Übertragungssubbänder durch das UE; und
Senden (205) eines Datenkanalsignals auf den mindestens zwei Übertragungssubbändern durch das UE; und
wobei nach dem Zugreifen auf die mindestens zwei Übertragungssubbänder durch das UE das Verfahren ferner umfasst:
gleichzeitiges Empfangen mindestens eines Satzes von Signalen durch das UE, der mindestens ein Signal aus den Folgenden umfasst: dem Satz von Referenzsignalen,
einem Synchronisationssignal, einem Signal eines Übertragungskanals, BCH, oder ein Steuerkanalsignal auf einem gemeinsamen Übertragungssubband, und das gemeinsame Übertragungssubband eines der mindestens zwei Übertragungssubbänder ist;
wobei das gleichzeitige Empfangen des mindestens einen Satzes von Signalen mindestens einen unterschiedlichen analogen Strahl der mehreren analogen Strahlen verwendet.

4. Verfahren nach Anspruch 3, wobei vor dem getrennten Empfangen eines Satzes von Referenzsignalen auf S Übertragungssubbändern durch das Benutzergerät UE, das Verfahren ferner umfasst:
Bestimmen der S Übertragungssubbänder gemäß vordefinierten Informationen,
wobei die vordefinierten Informationen zellspezifisch oder benutzerspezifisch sind; oder
Empfangen von Konfigurationsinformationen der S Übertragungssubbänder und Bestimmen der S Übertragungssubbänder basierend auf den Konfigurationsinformationen, wobei die Konfigurationsinformationen zellenspezifisch oder benutzerspezifisch sind.

5. Verfahren nach Anspruch 4, wobei nach dem Zugreifen auf die mindestens zwei Übertragungssubbänder durch das UE das Verfahren ferner umfasst:
Empfangen von Anweisungsinformationen über das gemeinsame Übertragungssubband durch das UE, wobei die Anweisungsinformationen verwendet werden, um anzuweisen, mindestens ein anderes Übertragungssubband in den S Übertragungssubbändern als ein zusätzliches Übertragungssubband zu verwenden, das zur Übertragung eines Signals des gemeinsamen Suchraums, CSS, verwendet wird.

6. Einrichtung zur Datenübertragung, für eine netzwerkseitige Vorrichtung, umfassend:
die Einrichtung zur Datenübertragung verwendet mehrere schmale analoge Hochfrequenzstrahlen;
eine Verarbeitungseinheit (401), die dazu konfiguriert ist, S Übertragungssubbänder für ein Benutzergerät UE zu bestimmen, wobei die S Übertragungssubbänder einander nicht überlappen und S eine ganze Zahl größer oder gleich 2 ist; und
eine Sendeeinheit (402), die dazu konfiguriert ist, einen Satz von Referenzsignalen auf den S Übertragungssubbändern getrennt zu senden, so dass das UE mindestens zwei Übertragungssubbänder aus M Übertragungssubbändern in den S Übertragungssubbändern basierend auf Kanalqualitätsmessungen auf den M Übertragungssubbändern auswählt und getrennt auf die mindestens zwei Übertragungssubbänder zugreift, wobei M eine ganze Zahl größer oder gleich 2 und kleiner oder gleich S ist; und
eine Empfangseinheit, die dazu konfiguriert ist, einen Bericht über die mindestens zwei ausgewählten Subbänder von dem UE zu empfangen; und
wobei die Sendeeinheit ferner dazu konfiguriert ist, gleichzeitig mindestens einen Satz von Signalen zu senden, der mindestens ein Signal aus den Folgenden umfasst:
dem Satz von Referenzsignalen, einem Synchronisationssignal, einem Signal eines Rundfunkkanals, BCH, oder einem Steuerkanalsignal auf einem gemeinsamen Übertragungssubband, und das gemeinsame Übertragungssubband eines der mindestens zwei Übertragungssubbänder ist, nachdem der Satz von Referenzsignalen auf den S Übertragungssubbändern getrennt gesendet wurde; und
die Sendeeinheit ferner dazu konfiguriert ist, auf den mindestens zwei Übertragungssubbändern getrennt ein Datenkanalsignal an das UE zu senden;
wobei die Sendeeinheit insbesondere dazu konfiguriert ist, den mindestens einen Satz von Signalen unter Verwendung mindestens eines unterschiedlichen analogen Strahls der mehreren analogen Strahlen gleichzeitig zu senden.

7. Einrichtung nach Anspruch 6, wobei die Verfahrenseinheit ferner dazu konfiguriert ist: nachdem die Verarbeitungseinheit die S Übertragungssubbänder für das Benutzergerät UE bestimmt, Konfigurationsinformationen der S Übertragungssubbänder an das UE zu senden, so dass das UE die S Übertragungssubbänder gemäß den Konfigurationsinformationen bestimmt, wobei die Konfigurationsinformationen zellenspezifisch oder benutzerspezifisch sind.

8. Einrichtung zur Datenübertragung für ein Benutzergerät, umfassend:
die Einrichtung zur Datenübertragung verwendet mehrere schmale analoge Hochfrequenzstrahlen;
eine Empfangseinheit (501), die dazu konfiguriert ist, einen Satz von Referenzsignalen auf S Übertragungssubbändern getrennt zu empfangen, wobei die S Übertragungssubbänder einander nicht überlappen und S eine ganze Zahl größer oder gleich 2 ist;
eine Verarbeitungseinheit (502), die dazu konfiguriert ist: Kanalqualitätsmessungen an M Übertragungssubbändern in den S Übertragungssubbändern durchzuführen;
mindestens zwei Übertragungssubbänder aus den M Übertragungssubbändern gemäß Kanalqualitätsmessergebnissen auszuwählen; und das Benutzergerät UE zu steuern, um auf die mindestens zwei Übertragungssubbänder zuzugreifen, wobei M eine ganze Zahl größer als oder gleich 2 und kleiner als oder gleich S ist; und
eine Sendeeinheit (503), die dazu konfiguriert ist, die mindestens zwei ausgewählten Subbänder der netzwerkseitigen Vorrichtung zu berichten; und
wobei die Empfangseinheit ferner dazu konfiguriert ist, gleichzeitig mindestens einen Satz von Signalen zu empfangen, der mindestens ein Signal aus Folgenden umfasst:
dem Satz von Referenzsignalen, einem Synchronisationssignal, einem Signal eines Rundfunkkanals, BCH, oder einem Steuerkanalsignal auf einem gemeinsamen Übertragungssubband, und das gemeinsame Übertragungssubband eines der mindestens zwei Übertragungssubbänder ist, nachdem die Verarbeitungseinheit das UE steuert, um auf die mindestens zwei Übertragungssubbänder zuzugreifen; und
die Sendeeinheit ferner dazu konfiguriert ist, ein Datenkanalsignal auf den mindestens zwei Übertragungssubbändern zu senden;
wobei die Empfangseinheit insbesondere dazu konfiguriert ist, den mindestens einen Satz von Signalen unter Verwendung mindestens eines unterschiedlichen analogen Strahls der mehreren analogen Strahlen zu empfangen.

9. Einrichtung nach Anspruch 8, wobei die Verarbeitungseinheit ferner dazu konfiguriert ist, die S Übertragungssubbänder gemäß vordefinierten Informationen zu bestimmen, wobei die vordefinierten Informationen zellenspezifisch oder benutzerspezifisch sind; oder
die Empfangseinheit ferner dazu konfiguriert ist, Konfigurationsinformationen der S Übertragungssubbänder zu empfangen, und die Verarbeitungseinheit ferner dazu konfiguriert ist, die S Übertragungssubbänder basierend auf den Konfigurationsinformationen zu bestimmen, wobei die Konfigurationsinformationen zellenspezifisch oder benutzerspezifisch sind.

## Revendications

1. Procédé de transmission de données par un dispositif côté réseau, comprenant :
l'utilisation par le dispositif côté réseau de multiples faisceaux analogiques haute fréquence étroits ;
la détermination (101) de S sous-bandes de transmission pour un équipement utilisateur, UE, les S sous-bandes de transmission ne se chevauchant pas les unes les autres, et S étant un nombre entier supérieur ou égal à 2 ;
l'envoi séparément (102), d'un ensemble de signaux de référence sur les S sous-bandes de transmission, de sorte que l'UE sélectionne au moins deux sous-bandes de transmission parmi M sous-bandes de transmission dans les S sous-bandes de transmission sur la base de mesures de qualité de canal sur les M sous-bandes de transmission, et accède séparément aux au moins deux sous-bandes de transmission,
M étant un nombre entier supérieur ou égal à 2 et inférieur ou égal à S ; et
la réception d'un rapport sur les au moins deux sous-bandes sélectionnées de l'UE ; et
l'envoi séparément (103) d'un signal de canal de données à l'UE sur les au moins deux sous-bandes de transmission ; et
après l'envoi séparément d'un ensemble de signaux de référence sur les S sous-bandes de transmission, le procédé comprenant en outre :
l'envoi simultanément d'au moins un ensemble de signaux, comprenant au moins un signal parmi : l'ensemble de signaux de référence, un signal de synchronisation, un signal de canal de diffusion, BCH, ou un signal de canal de commande sur une sous-bande de transmission commune, et la sous-bande de transmission commune étant l'une des au moins deux sous-bandes de transmission ;
l'envoi simultanément de l'au moins un ensemble de signaux utilisant au moins un faisceau analogique différent des multiples faisceaux analogiques.

2. Procédé selon la revendication 1, après la détermination des S sous-bandes de transmission pour l'équipement utilisateur UE, le procédé comprenant en outre :
l'envoi d'informations de configuration des S sous-bandes de transmission à l'UE, de sorte que l'UE détermine les S sous-bandes de transmission en fonction des informations de configuration, les informations de configuration étant spécifiques à une cellule ou spécifiques à un utilisateur.

3. Procédé de transmission de données par un équipement utilisateur, comprenant :
l'utilisation par l'équipement utilisateur de multiples faisceaux analogiques haute fréquence étroits ;
la réception séparément (201), par l'équipement utilisateur, UE, d'un ensemble de signaux de référence sur S sous-bandes de transmission, les S sous-bandes de transmission ne se chevauchant pas les unes les autres, et S étant un nombre entier supérieur ou égal à 2 ;
la réalisation (202), par l'UE, de mesures de qualité de canal sur M sous-bandes de transmission dans les S sous-bandes de transmission, M étant un nombre entier supérieur ou égal à 2 et inférieur ou égal à S ;
la sélection (203), par l'UE, d'au moins deux sous-bandes de transmission parmi les M sous-bandes de transmission en fonction de résultats de mesure de qualité de canal, et le rapport des au moins deux sous-bandes sélectionnées à un dispositif côté réseau ;
l'accès (204), par l'UE, aux au moins deux sous-bandes de transmission ; et l'envoi (205), par l'UE, d'un signal de canal de données sur les au moins deux sous-bandes de transmission, et
après l'accès, par l'UE, aux au moins deux sous-bandes de transmission, le procédé comprenant en outre :
la réception simultanément, par l'UE, d'au moins un ensemble de signaux, comprenant au moins un signal parmi : l'ensemble de signaux de référence, un signal de synchronisation, un signal de canal de diffusion, BCH, ou un signal de canal de commande sur une sous-bande de transmission commune, et la sous-bande de transmission commune étant l'une des au moins deux sous-bandes de transmission ;
la réception simultanément de l'au moins un ensemble de signaux utilisant au moins un faisceau analogique différent des multiples faisceaux analogiques.

4. Procédé selon la revendication 3, avant la réception séparément, par l'équipement utilisateur UE, d'un ensemble de signaux de référence sur S sous-bandes de transmission, le procédé comprenant en outre :
la détermination des S sous-bandes de transmission en fonction d'informations prédéfinies, les informations prédéfinies étant spécifiques à une cellule ou spécifiques à un utilisateur ; ou
la réception d'informations de configuration des S sous-bandes de transmission, et la détermination des S sous-bandes de transmission sur la base des informations de configuration, les informations de configuration étant spécifiques à une cellule ou spécifiques à un utilisateur.

5. Procédé selon la revendication 4, après l'accès, par l'UE, aux au moins deux sous-bandes de transmission, le procédé comprenant en outre :
la réception, par l'UE, d'informations d'instruction sur la sous-bande de transmission commune, les informations d'instruction étant utilisées pour ordonner l'utilisation d'au moins une autre sous-bande de transmission dans les S sous-bandes de transmission en tant que sous-bande de transmission supplémentaire qui est utilisée pour transmettre un signal d'espace de recherche commun CSS.

6. Appareil de transmission de données, pour un dispositif côté réseau, comprenant :
l'utilisation par l'appareil de transmission de données de multiples faisceaux analogiques haute fréquence étroits ;
une unité de traitement (401), configurée pour déterminer S sous-bandes de transmission pour un équipement utilisateur UE, les S sous-bandes de transmission ne se chevauchant pas les unes les autres, et S étant un nombre entier supérieur ou égal à 2; et
une unité d'envoi (402), configurée pour: envoyer séparément un ensemble de signaux de référence sur les S sous-bandes de transmission, de sorte que l'UE sélectionne au moins deux sous-bandes de transmission parmi M sous-bandes de transmission dans les S sous-bandes de transmission sur la base de mesures de qualité de canal sur les M sous-bandes de transmission, et accède séparément aux au moins deux sous-bandes de transmission, M étant un nombre entier supérieur ou égal à 2 et inférieur ou égal à S ; et
une unité de réception, configurée pour: recevoir un rapport sur les au moins deux sous-bandes sélectionnées de l'UE, et
l'unité d'envoi étant en outre configurée pour envoyer simultanément au moins un ensemble de signaux, comprenant au moins un signal parmi : l'ensemble de signaux de référence, un signal de synchronisation, un signal de canal de diffusion, BCH, ou un signal de canal de commande sur une sous-bande de transmission commune, et la sous-bande de transmission commune étant l'une des au moins deux sous-bandes de transmission après l'envoi séparément de l'ensemble de signaux de référence sur les S sous-bandes de transmission ; et
l'unité d'envoi étant en outre configurée pour envoyer séparément un signal de canal de données à l'UE sur les au moins deux sous-bandes de transmission ;
l'unité d'envoi étant spécifiquement configurée pour envoyer simultanément l'au moins un ensemble de signaux à l'aide d'au moins un faisceau analogique différent des multiples faisceaux analogiques.

7. Appareil selon la revendication 6, l'unité de procédé étant en outre configurée pour : après que l'unité de traitement a déterminé les S sous-bandes de transmission pour l'équipement utilisateur UE, envoyer des informations de configuration des S sous-bandes de transmission à l'UE, de sorte que l'UE détermine les S sous-bandes de transmission en fonction des informations de configuration, les informations de configuration étant spécifiques à une cellule ou spécifiques à un utilisateur.

8. Appareil de transmission de données, pour un équipement utilisateur, comprenant :
l'appareil de transmission de données utilisant de multiples faisceaux analogiques haute fréquence étroits ;
une unité de réception (501), configurée pour recevoir séparément un ensemble de signaux de référence sur S sous-bandes de transmission, les S sous-bandes de transmission ne se chevauchant pas les unes les autres, et S étant un nombre entier supérieur ou égal à 2 ;
une unité de traitement (502), configurée pour: réaliser des mesures de qualité de canal sur M sous-bandes de transmission dans les S sous-bandes de transmission ; sélectionner au moins deux sous-bandes de transmission parmi les M sous-bandes de transmission en fonction des résultats de mesure de qualité de canal ; et commander un équipement utilisateur UE pour accéder aux au moins deux sous-bandes de transmission, M étant un nombre entier supérieur ou égal à 2 et inférieur ou égal à S ; et
une unité d'envoi (503), configurée pour rapporter les au moins deux sous-bandes sélectionnées au dispositif côté réseau ; et l'unité de réception étant en outre configurée pour recevoir simultanément au moins un ensemble de signaux, comprenant au moins un signal parmi : l'ensemble de signaux de référence, un signal de synchronisation, des signaux de canal de diffusion BCH, ou un signal de canal de commande sur une sous-bande de transmission commune, et la sous-bande de transmission commune étant l'une des au moins deux sous-bandes de transmission après que l'unité de traitement a commandé l'UE pour accéder aux au moins deux sous-bandes de transmission ; et
l'unité d'envoi étant en outre configurée pour envoyer un signal de canal de données sur les au moins deux sous-bandes de transmission ;
l'unité de réception étant spécifiquement configurée pour recevoir l'au moins un ensemble de signaux à l'aide d'au moins un faisceau analogique différent des multiples faisceaux analogiques.

9. Appareil selon la revendication 8, l'unité de traitement étant en outre configurée pour déterminer les S sous-bandes de transmission en fonction d'informations prédéfinies, les informations prédéfinies étant spécifiques à une cellule ou spécifiques à un utilisateur ; ou
l'unité de réception étant en outre configurée pour recevoir des informations de configuration des S sous-bandes de transmission, et l'unité de traitement étant en outre configurée pour déterminer les S sous-bandes de transmission sur la base des informations de configuration, les informations de configuration étant spécifiques à une cellule ou spécifiques à un utilisateur.
